# EUROPÄISCHE PATENTANMELDUNG

(11) **EP 4 141 739 A1**
(43) Veröffentlichungstag der Anmeldung: **01.03.2023**
(21) Anmeldenummer: 21193802.2
(22) Anmeldetag: 30.08.2021
(51) Int. Cl.: G06K 9/62, G06V 10/25

(54) **VERFAHREN ZUM BEREITSTELLEN VON TRAININGS-BILDDATEN ZUM TRAINIEREN EINER FUNKTION**

(71) Anmelder: Siemens Aktiengesellschaft, 80333 München (DE)
(72) Erfinder: Fiebag, Daniel, 91052 Erlangen (DE); Metzner, Maximilian, 96047 Bamberg (DE); Weißert, Sören, 73430 Aalen (DE)

(57) **Zusammenfassung**

Die Erfindung betrifft ein computerimplementiertes Verfahren zum Bereitstellen von Trainings-Bilddaten (TBD) zum Trainieren einer Funktion, insbesondere einer Objekterkennungs-Funktion (F0), wobei das Verfahren folgende Schritte umfasst:
S1
Bereitstellen zumindest eines annotierten Bildes (AB), wobei das annotierte Bild (AB) zumindest ein Objekt (O1, O2, O31, O32, O41, O42, O43, O5) mit einer dem zumindest einem Objekt zugeordneten Annotation (L1, L2) aufweist, wobei die Annotation einen Bildbereich beschreibt, in dem das zumindest eine Objekt (O1, O2, O31, O32, O41, O42, O43, O5) enthalten ist,
S2
Auswählen eines Objektes (O1, O2, O31, O32, O41, O42, O43, O5) in dem annotierten Bild (AB),
S3
Entfernen des durch die Annotation (L1, L2) beschriebenen Bildbereichs, um das ausgewählte Objekt (O1, O2, O31, O32, O41, O42, O43, O5) samt der dem ausgewählten Objekt (O1, O2, O31, O32, O41, O42, O43, O5) zugeordneten Annotation (L1, L2) aus dem annotierten Bild (AB) zu entfernen und dadurch ein modifiziertes annotiertes Bild (MAB) zu erzeugen,
S4
Bereitstellen der das modifizierte annotierte Bild (MAB) enthaltenden Trainings-Bilddaten (TBD).

## Beschreibung

Die Erfindung betrifft computerimplementierte Verfahren und Systeme zum Bereitstellen bzw. zum Erzeugen und Bereitstellen von Trainings-Bilddaten zum Trainieren einer Funktion, insbesondere einer Objekterkennungs- oder einer Segmentierungs-Funktion.

Außerdem betrifft die Erfindung Computerprogrammprodukt zum Ausführen des vorgenannten Verfahrens.

Des Weiteren betrifft die Erfindung eine Verwendung der vorgenannten Trainings-Bilddaten zum Trainieren einer Funktion und eine Verwendung der trainierten Funktion zur Kontrolle der Richtigkeit der Bestückung von Flachbaugruppen bei Flachbaugruppenproduktion.

Verfahren und Systeme der eingangs genannten Art sind im Stand der Technik bekannt.

Maschinelle Lernverfahren, insbesondere Künstliche Neuronale Netze (KNN), stellen in der Bildverarbeitung ein gigantisches Potenzial für eine Verbesserung der Leistungsfähigkeit und Robustheit bei gleichzeitiger Verringerung des Einrichtungsund Pflegeaufwands dar. Insbesondere kommen hierbei Faltende Neuronale Netze (Convolutional Neural Networks - CNN) zum Einsatz. Einsatzgebiete umfassen die Bildklassifikation (z.B. für eine gut/schlecht Prüfung), die Objekterkennung, die Poseschätzung sowie die Segmentierung.

Grundlage aller maschinellen Lernverfahren, insbesondere KNNs und CNNs, ist eine selbstständige, auf Daten basierende, Optimierung des Programms, im Gegensatz zur expliziten Regelvergabe der klassischen Programmierung. Insbesondere bei CNNs kommen dabei größtenteils überwachte Lernverfahren zum Einsatz. Diese sind dadurch gekennzeichnet, dass für das Training sowohl beispielhafte Daten als auch das zugehörige richtige Ergebnis, das sogenannte Label, benötigt werden.

Für das Training von CNNs werden sehr viele Datensätze, z.B. 2D- und/oder 3D-Bilder, mit entsprechendem Label benötigt. Die Erstellung des Labels erfolgt dabei klassischerweise manuell. Während dies bei der Klassifizierung (z.B. gut/ schlecht) wenig Zeit erfordert, ist dies bei der Objekterkennung, der Poseschätzung sowie der Segmentierung zunehmend aufwändig. Dies stellt einen substantiellen Aufwand beim Einsatz KI-basierter Bildverarbeitungslösungen dar. Es fehlt daher eine Methode, dieses Labeling für derartige Verfahren (insb. Objekterkennung, auf Poseschätzung oder Segmentierung übertragbar) zu automatisieren.

Die Beschaffung korrekter Trainingsdaten stellt beim Einsatz KI-basierter Verfahren einen, wenn nicht den größten, Aufwandsfaktor dar.

Es gibt bestehende Ansätze, die benötigten Trainingsdaten synthetisch, anhand eines Digitalen Zwillings, zu erzeugen, da hier eine automatisierte Ausleitung des Labels relativ kostengünstig ist, und beliebig viele Daten erzeugt werden können (siehe auch EP Anmeldung der Anmelderin 20176860.3). Problematisch hierbei ist, dass die synthetischen Daten klassischerweise nicht alle realen optischen Eigenschaften und Einflüsse (z.B. Reflexionen, natürliche Beleuchtung, etc.) abbilden können, oder aber extrem rechenintensiv sind (vgl. https://arxiv.org/pdf/1902.03334.pdf; hier wurden 400 Rechencluster mit jeweils 16-Kern CPU mit 112 GB RAM verwendet). Derartig trainierte Netze sind daher zwar grundlegend funktionsfähig, jedoch in der Realität meist nicht vollständig robust (80%-Lösung). Daher ist weiterhin meist ein Nachtraining mit realen, gelabelten Daten notwendig, um eine für den industriellen Einsatz notwendigen Leistungsfähigkeit zu erreichen.

Einen weiteren Ansatz stellt die sogenannte "Data Augmentation" dar. Hierbei wird der ursprüngliche gelabelte Datensatz durch Bildverarbeitungsoperationen derart verändert, dass das resultierende Bild für den Algorithmus anders aussieht, jedoch weiterhin das Label des Ursprungsbilds unverändert genutzt werden kann, oder zumindest direkt umgerechnet werden kann. Das Data Augmentation setzt allerdings eine Veränderung, beispielsweise eine Umrechnung des ursprünglichen Labels, z.B. durch eine Translation (Verschiebung) und/oder Skalierung, da das Objekt samt dem Label auf einem "augmentierten" Bild typischerweise nicht an der gleichen Stelle verbleibt. Bei bestimmten Anwendungsfällen ist dieses Verfahren allerdings fehleranfällig.

Die Aufgabe der vorliegenden Erfindung kann somit darin gesehen werden, Verfahren und Systeme zum Erzeugen von Trainings-Bilddaten zu verbessern.

Die Aufgabe wird mit einem eingangs genannten Verfahren erfindungsgemäß dadurch gelöst, dass das Verfahren folgende Schritte umfasst:
S1 Bereitstellen zumindest eines annotierten Bildes, wobei das annotierte Bild zumindest ein Objekt mit einer dem zumindest einem Objekt zugeordneten Annotation (Label) aufweist, wobei die Annotation einen Bildbereich (Bereich des Bildes) beschreibt oder definiert, in dem das zumindest eine Objekt enthalten ist,
S2 Auswählen eines Objektes in dem annotierten Bild,
S3 Entfernen des durch die Annotation beschriebenen Bildbereichs, um das ausgewählte Objekt samt der dem ausgewählten Objekt zugeordneten Annotation aus dem annotierten Bild zu entfernen und dadurch ein modifiziertes annotiertes Bild zu erzeugen,
S4 Bereitstellen der das modifizierte annotierte Bild enthaltenden Trainings-Bilddaten.

Es ist zu verstehen, dass das modifizierte annotierte Bild zu den Trainings-Bilddaten hinzugefügt wird, bevor die Trainings-Bilddaten bereitgestellt werden.

Dadurch werden (reale, nicht synthetische) Trainings-Bilddaten erzeugt, bei welchen jedes Label entweder vorhanden ist oder nicht. Im Gegensatz zu herkömmlichen Verfahren wird dabei nicht nur ein gelabeltes Bild optisch verändert (Data Augmentation), sondern insbesondere auch das Vorhandensein einzelner zu detektierender Objekte gezielt beeinflusst. Somit wird auch der relevante Inhalt des Datensatzes (der Trainings-Bilddaten) angepasst, wodurch wiederum eine Erhöhung der Heterogenität des Eingangsdatensatzes ohne die zusätzliche Aufnahme und Labeling weiterer Bilder erzielt werden kann. Data Augmentation ist in diesem Sinne rein optisches Verfahren, das keinen Einfluss auf den Inhalt der Trainings-Bilddaten hat. Insbesondere wird die Anzahl der Objekte im Bild bei Data Augmentation nicht geändert. Genannt sei z.B. Erkennung von Bauteilen und Ermittlung deren Position auf einer Flachbaugruppe. Anhand der Trainings-Bilddaten, die gemäß dem Verfahren aus der vorliegenden Offenbarung erzeugt werden, kann beispielsweise durch einen Stücklistenabgleich die korrekte Bestückung einer Leiterplatte ermittelt werden. Ein anderes Beispiel ist die Erkennung von guten/schlechten Flachbaugruppen, bei welcher als Basis für die Beurteilung, die Beurteilung der Lötstellen (gut/schlecht) herangezogen wird. Die Anwendung der vorliegenden Offenbarung ist allerdings nicht auf die genannten Beispiele beschränkt.

Bei einer Ausführungsform kann es vorgesehen sein, dass die Annotation / das Label eine Umrandung des Objektes enthält. Vorzugsweise ist die Umrandung als Rechteck ausgebildet und ist derart optimal, dass sie den kleinstmöglichen Bildbereich abgrenzt, in dem das umrandete Objekt noch enthalten sein kann. Das bedeutet, dass bei einer kleineren Umrandung das Objekt nicht vollständig in dem durch die kleinere Umrandung abgegrenzten Bildbereich enthalten sein wird.

Bei einer Ausführungsform kann es vorgesehen sein, dass das annotierte Bild einen Hintergrund aufweist.

Bei einer Ausführungsform kann es vorgesehen sein, dass zusätzlich mindestens ein Bild, in dem keine Objekte enthalten sind (zum Beispiel eine leere (unbestückte) Leiterplatte). Mit anderen Worten kann es zweckmäßig sein, ein zusätzliches Bild derselben Szene (desselben Hintergrunds) ohne Objekte aufzunehmen.

Bei einer Ausführungsform kann es vorgesehen sein, dass die Auswahl des zumindest einen Objektes anhand der diesem Objekt zugeordneten Annotation (des Labels) erfolgt. Bei einer Ausführungsform kann es vorgesehen sein, dass das Auswählen automatisch erfolgt.

Bei einer Ausführungsform kann es vorgesehen sein, dass das Label (die Annotation) eines jeden Objekts im Bild Informationen über Identifikation (Typ, Beschreibung, Art) des Objektes und/oder seine Position auf dem Bild enthält.

Bei einer Ausführungsform kann es vorgesehen sein, dass der Hintergrund ein digitales Abbild einer Leiterplatte aufweist.

Bei einer Ausführungsform kann es vorgesehen sein, dass annotierte Bild eine Vielzahl von Objekten umfasst.

Bei einer Ausführungsform kann es vorgesehen sein, dass die Objekte unterschiedlich sind.

Jedes Objekt kann Teil-Objekte aufweisen, die zu einer Gesamtheit - zu einem Objekt - zusammengefasst werden können. Die Teil-Objekte können voneinander baulich getrennt ausgebildet sein. Alternativ können ein oder mehrere Objekte als ein baulich einheitliches Teil ausgebildet sein.

Bei einer Ausführungsform kann es vorgesehen sein, dass die das zumindest eine Objekt als ein digitales Abbild eines elektronischen Bauelements zum Bestücken einer Leiterplatte bzw. eines elektronischen Bauelements einer Flachbaugruppe ausgebildet ist.

Bei einer Ausführungsform kann es vorgesehen sein, dass die Schritte S2 und S3 so lange wiederholt werden, bis das modifizierte annotierte Bild keine Objekte mehr aufweist (also z.B. nur den Hintergrund), um mehrere unterschiedliche modifizierte annotierte Bilder zu erzeugen, wobei die unterschiedlichen modifizierten annotierten Bilder den Trainings-Bilddaten hinzugefügt werden.

Bei einer Ausführungsform kann es vorgesehen sein, dass das annotierte und das modifizierte annotierte Bild weiterverarbeitet werden, um weitere annotierte Bilder zu erzeugen, wobei die weiteren annotierten Bilder den Trainings-Bilddaten hinzugefügt werden.

Bei einer Ausführungsform kann es vorgesehen sein, dass das Entfernen des durch die Annotation beschriebenen Bildbereichs ein Überschreiben des Bildbereichs umfasst. Bei einer Ausführungsform kann es vorgesehen sein, dass zum Überschreiben des Bildbereichs das vorgenannte Bild ohne darin enthaltenen Objekte verwendet wird.

Bei einer Ausführungsform kann es vorgesehen sein, dass zum Überschreiben eine, vorzugsweise genau eine Farbe, ein Zufallsmuster oder ein Bereich eines anderen Bildes, beispielsweise eines Hintergrundbildes verwendet wird.

Bei einer Ausführungsform kann es vorgesehen sein, dass der Bereich des anderen Bildes dem Bildbereich korrespondiert, insbesondere die gleiche Größe und/oder die Position hat.

Bei einer Ausführungsform kann es also vorgesehen sein, dass der durch die Annotation beschriebene Bildbereich (und das zumindest eine darin enthaltene Objekt) durch den entsprechenden Bildbereich der weiteren Szene (des anderen Bildes), beispielsweise einer leeren Aufnahme (d.h. Hintergrund ohne Objekte) ersetzt, vorzugsweise überschrieben werden. Hierdurch wird der relevante vom Objekt belegte Bildbereich durch den beispielsweise leeren Bildbereich überschrieben. Der neu erzeugte Datensatz in Form eines modifizierten annotierten Bildes enthält somit das eine entsprechende Objekt nicht mehr (gegebenenfalls vorhandene weitere Objekte allerdings schon).

Bei einer Ausführungsform kann es vorgesehen sein, dass das andere Bild das annotierte Bild das zumindest eine Objekt nicht enthält. Beispielsweise kann das andere Bild den gleichen Hintergrund wie das annotierte Bild beispielsweise nur den Hintergrund im annotierten Bild - also ohne das/die Objekt/e - aufweisen.

Bei einer Ausführungsform kann es vorgesehen sein, dass die Annotation Informationen über Größe und Position des zumindest einen Objektes in dem annotierten Bild und/oder eine Segmentierung, d.h. Information über alle dem Objekt zugehörigen Pixel in dem annotierten Bild, enthält.

Die Aufgabe wird auch mit einem eingangs genannten System erfindungsgemäß dadurch gelöst, dass das System eine erste Schnittstelle, eine zweite Schnittstelle und eine Recheneinrichtung umfasst, wobei
- die erste Schnittstelle dazu konfiguriert ist, zumindest ein annotiertes Bild zu empfangen, wobei das annotierte Bild zumindest ein Objekt mit einer dem zumindest einem Objekt zugeordneten Annotation (Label) aufweist, wobei die Annotation einen Bildbereich (Bereich des Bildes) beschreibt oder definiert, in dem das zumindest eine Objekt enthalten ist,
- die Recheneinrichtung dazu konfiguriert ist, ein Objekt in dem annotierten Bild auszuwählen, und den durch die Annotation beschriebenen Bildbereich zu entfernen, um das ausgewählte Objekt samt der dem ausgewählten Objekt zugeordneten Annotation aus dem annotierten Bild zu entfernen und dadurch ein modifiziertes annotiertes Bild zu erzeugen, (und das modifizierte annotierte Bild den Trainings-Bilddaten hinzuzufügen)
- die zweite Schnittstelle dazu konfiguriert ist, die das modifizierte annotierte Bild (MAB) enthaltenden Trainings-Bilddaten bereitzustellen.

Darüber hinaus wird die Aufgabe mit einer Verwendung der Trainings-Bilddaten, die nach dem vorgenannten Verfahren bereitgestellt werden, zum Trainieren einer Funktion gelöst.

Mit anderen Worten wird die Aufgabe mit einem Verfahren zum Trainieren einer Funktion erfindungsgemäß dadurch gelöst, dass eine (z.B. untrainierte oder vortrainierte) Funktion mit Trainings-Bilddaten trainiert wird, wobei die Trainings-Bilddaten nach dem vorgenannten Verfahren bereitgestellt werden.

Obendrein wird die Aufgabe mit einer Verwendung einer trainierten Funktion zur Kontrolle der Richtigkeit der Bestückung von Flachbaugruppen bei Flachbaugruppenproduktion, wobei die Funktion wie vorgenannt beschrieben trainiert wird, gelöst.

Mit anderen Worten wird die Aufgabe mit einem Verfahren zur Kontrolle der Richtigkeit der Bestückung von Flachbaugruppen bei Flachbaugruppenproduktion erfindungsgemäß dadurch gelöst, dass die Richtigkeit der Bestückung von Flachbaugruppen bei Flachbaugruppenproduktion durch (oder mittels) eine(r) trainierte(n) Funktion überprüft wird, wobei die Funktion mit Trainings-Bilddaten trainiert wird, wobei die Trainings-Bilddaten nach dem vorgenannten Verfahren bereitgestellt werden.

Die Erfindung samt weiteren Vorteilen ist im Folgenden anhand beispielhafter Ausführungsformen näher erläutert, die in der Zeichnung veranschaulicht sind. In dieser zeigt
- FIG 1: ein Ablaufdiagramm eines computerimplementierten Verfahrens,
- FIG 2: mögliche Zwischenergebnisse der Verfahrensschritte des Verfahrens gemäß FIG 1,
- FIG 3: ein System zum Erzeugen und Bereitstellen von Trainings-Bilddaten,
- FIG 4: ein System zum Trainieren einer Objekterkennungs-Funktion, und
- FIG 5: ein System zur Kontrolle der Richtigkeit der Bestückung von Flachbaugruppen bei Flachbaugruppenproduktion.

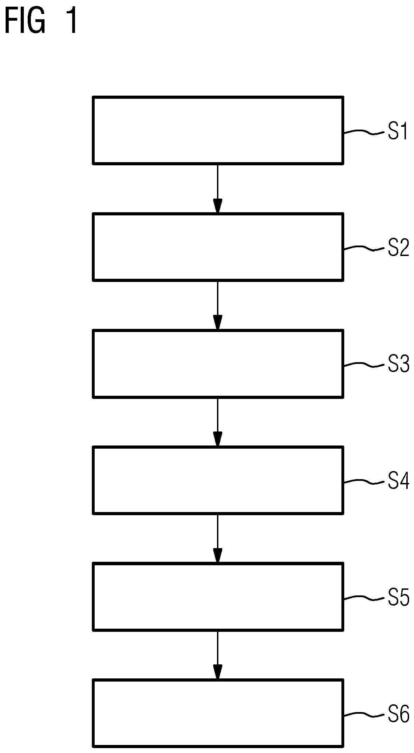

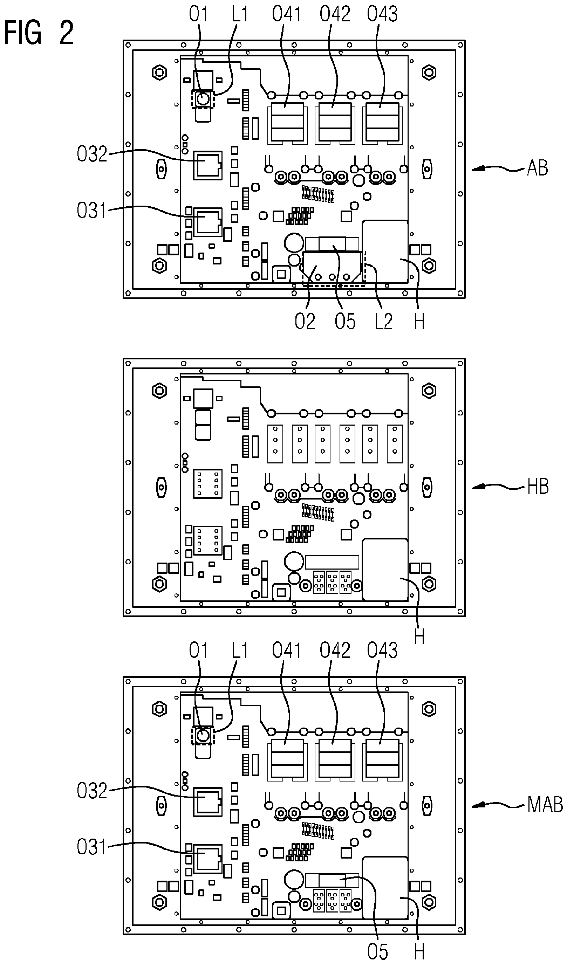

Zunächst wird auf FIG 1 und FIG 2 Bezug genommen. FIG 1 zeigt ein Ablaufdiagramm eines computerimplementierten Verfahrens. FIG 2 veranschaulicht mögliche Zwischenergebnisse der Verfahrensschritte des Verfahrens gemäß FIG 1.

In einem Schritt S1 wird ein annotiertes Bild AB (siehe FIG 2) bereitgestellt.

In dem annotierten Bild AB sind mehrere Objekte O1, O2, O31, O32, O41, O42, O43, O5 zu erkennen, die unterschiedlich sein können. Die Objekte O1, O2, O31,O32, O41, O42, O43, O5 sind beispielhaft als elektronische Bauelemente bzw. als ihre digitalen Abbilder ausgebildet.

Den Objekten O1 und O2 ist je ein Label bzw. eine Annotation L1, L2 zugeordnet, wobei einem ersten Objekt O1 ein erstes Label L1 und einem zweiten Objekt O2 ein zweites Label L2 zugeordnet ist.

Die Label L1, L2 definieren einen Bereich des Bildes AB, in dem das entsprechende Objekt O1, O2 enthalten, vorzugsweise vollständig enthalten ist. Die Label L1, L2 können z.B. Angaben zu Höhen und Breiten entsprechender Bildbereiche enthalten, sodass die dazugehörigen Objekte O1, O2 in den Bereichen enthalten sind.

Die Label L1, L2 können graphisch als eine Umrandung der entsprechenden Objekte O1, O2 ausgebildet sein. Vorzugsweise ist die Umrandung L1, L2 als Rechteck ausgebildet und ist derart optimal, dass sie den kleinstmöglichen Bildbereich abgrenzt, in dem das umrandete Objekt O1, O2 noch enthalten sein kann. Das bedeutet, dass bei einer kleineren Umrandung das Objekt O1, O2 nicht vollständig in dem durch die kleinere Umrandung abgegrenzten Bildbereich enthalten sein wird.

FIG 2 lässt außerdem erkennen, dass das annotierte Bild AB einen Hintergrund H aufweist. Der Hintergrund H weist beispielsweise eine Leiterplatte bzw. ihr digitales Abbild auf. Das Bild AB ist somit eine Aufnahme einer (teilweise bestückten) Flachbaugruppe.

In einem Schritt S2 wird zumindest ein Objekt in dem annotierten Bild AB ausgewählt. Das kann beispielsweise das zweite Objekt O2 sein.

In einem Schritt S3 wird das ausgewählte Objekt O2 und sein Label L2 aus dem annotierten Bild AB entfernt, indem der durch das Label L2 definierte Bildbereich entfernt, z.B. überschrieben wird. Dadurch wird ein modifiziertes annotiertes Bild MAB erzeugt.

Das zweite Objekt O2 ist in dem modifizierten Bild MAB nicht mehr vorhanden. Das zweite Label L2 ist in der (Gesamt)Annotation des modifizierten annotierten Bildes MAB ist nicht vorhanden.

Auf diese Weise kann eine Vielzahl modifizierter Bilder MAB erzeugt werden, die (beispielsweise zusammen mit dem annotierten Bild AB) als Trainings-Bilddaten bereitgestellt werden - Schritt S4.

FIG 2 lässt außerdem ein weiteres Bild HB erkennen. In dem Bild HB ist eine (teilweise) unbestückte Leiterplatte erkennbar, auf der keiner der (zu erkennenden) Objekte O1, O2, O31, O32, O41, O42, O43, O5 abgebildet sind.

Ein solches Bild HB kann hilfsweise bereitgestellt werden.

Das Entfernen des durch das Label L2 definierten Bildbereichs in Schritt S3 kann dadurch erfolgen, dass dieser Bildbereich überschrieben wird.

Zum Überschreiben des Bildbereichs kann beispielsweise eine, vorzugsweise genau eine Farbe, ein Zufallsmuster oder ein Bereich eines anderen Bildes, beispielsweise eines Hintergrundbildes HB verwendet werden.

Zweckdienlich kann es sein, dass der Bereich des Hintergrundbildes HB, mit dem der durch das Label L2 definierte Bildbereich überschrieben wird, und der zu überschreibende Bereich selbst einander korrespondieren, insbesondere gleiche Größe und/oder Position aufweisen.

Das modifizierte Bild MAB ist beispielsweise durch ein solches Überschreiben entstanden. Ein solches modifiziertes Bild MAB ist sehr realitätstreu und verbessert die Qualität und die Genauigkeit einer Funktion, wenn sie mit Bildern solcher Art trainiert wird.

Das annotierte Bild AB und das/die modifizierte/n annotierte/n Bilder können weiterverarbeitet, um weitere Bilder für die Trainings-Bilddaten zu erzeugen. Hierzu kann eine Falschfarbendarstellung und/oder verschiedene Graustufen verwendet werden, beispielsweise um unterschiedlichen Beleuchtungsszenarien während der Produktion Rechnung zu tragen. Außerdem kann Beleuchtung, Farbsättigung u.Ä. variiert werden. Es versteht sich, dass die Variation der Beleuchtung, Farbsättigung usw. auch beim Erzeugen, z.B. beim Aufnehmen des annotierten Bildes AB und/oder bei der Weiterverarbeitung des annotierten Bildes AB und des/der modifizierten annotierten Bildes(r) erfolgen kann. Z.B. kann das Hintergrundbild HB in einem ersten Farbton und das Annotierte Bild AB in einem zweiten Farbton erzeugt werden, wobei der erste Farbton sich von dem zweiten Farbton unterscheidet.

Durch Wiederholung der Schritte S2 und S3 können schnell große Trainings-Daten-Bildsätze erzeugt werden.

Bei n Objekten können z.B. 2ⁿ⁺¹ eindeutige Variationen des Vorhandenseins der Objekte erzeugt werden. Am Beispiel einer Leiterplatte, auf der beispielsweise 52 elektronische Bauteile vorhanden sind, können rechnerisch aus einem Bild 2⁵³ also ca. 9 × 10¹⁵ unterschiedliche Bilder für das Training, erstellt werden.

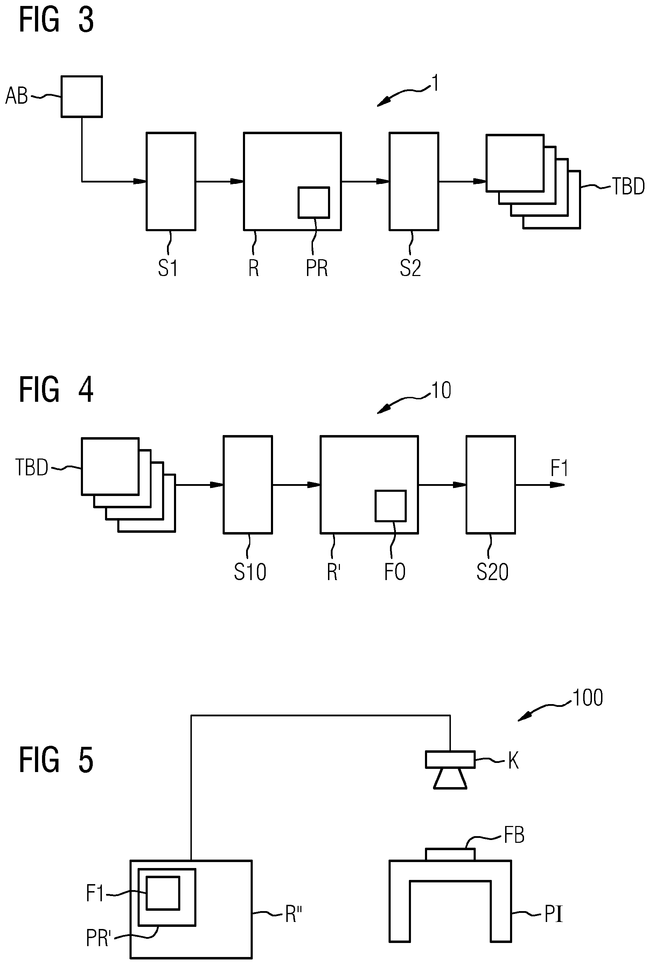

FIG 3 zeigt ein System 1 zum Erzeugen, beispielsweise gemäß dem oben beschriebenen Verfahren, und Bereitstellen von Trainings-Bilddaten TBD. Das System 1 umfasst eine erste Schnittstelle S1, eine zweite Schnittstelle S2 und eine Recheneinrichtung R. Die erste Schnittstelle S1 ist dazu konfiguriert, das annotierte Bild AB zu empfangen. Die Recheneinrichtung R ist dazu konfiguriert, ein Objekt O1, O2 in dem annotierten Bild AB auszuwählen, und den durch die Annotation L1, L2 beschriebenen Bildbereich des annotierten Bildes AB zu entfernen. Dadurch wird das ausgewählte Objekt O1, O2 samt der dem ausgewählten Objekt O1, O2 zugeordneten Annotation L1, L2 aus dem annotierten Bild AB entfernt und dadurch ein modifiziertes annotiertes Bild MAB erzeugt. Hierzu kann die Recheneinrichtung R ein Computerprogramm PR aufweisen, das Befehle umfasst, die bei der Ausführung des Computerprogramms PR durch die Recheneinrichtung R diese veranlassen, die die Trainings-Bilddaten TBD zu erzeugen. Die Recheneinrichtung R kann sodann das modifizierte annotierte Bild MAB und das annotierte Bild AB den Trainings-Bilddaten TBD. Die zweite Schnittstelle S2 ist dazu konfiguriert, die Trainings-Bilddaten TBD bereitzustellen.

Die Trainings-Bilddaten TBD können zum Trainieren einer Funktion, insbesondere einer Objekterkennungs-Funktion F0 verwendet werden. FIG 4 zeigt ein System 10 zum Trainieren der Objekterkennungs-Funktion F0. Das System 10 weist ebenfalls eine erste Schnittstelle S10, eine zweite Schnittstelle S20 und eine Recheneinrichtung R'. Die erste Schnittstelle S10 ist dazu konfiguriert, die Trainings-Bilddaten TBD zu empfangen. Die Recheneinrichtung R' ist dazu konfiguriert, eine beispielsweise auf der Recheneinrichtung R' gespeicherte oder der Recheneinrichtung R' vor dem Training bereitgestellte untrainierte oder vortrainierte Objekterkennungs-Funktion F0 mit den Trainings-Bilddaten TBD zu trainieren und eine trainierte Objekterkennungs-Funktion F1 zu erzeugen. Die zweite Schnittstelle S20 ist dazu konfiguriert, die Objekterkennungs-Funktion F1 bereitzustellen.

Eine solche Objekterkennungs-Funktion F1 kann beispielsweise zur Kontrolle der Richtigkeit der Bestückung von Flachbaugruppen bei Flachbaugruppenproduktion. FIG 5 zeigt ein schematisch ein System 100, welches dabei eingesetzt werden kann. Das System 100 weist eine Recheneinrichtung R". An die Recheneinrichtung R" ist eine Kamera K angeschlossen, die eingerichtet ist, nach einem bestimmten Prozessschritt eines Prozesses hergestellte Flachbaugruppen FB an einer Produktionsinsel PI zu erfassen und die erfassten Aufnahmen zur Analyse an die Recheneinrichtung R" zu senden. Um die Aufnahmen zu analysieren und beispielsweise die Bestückung der Flachbaugruppen FB hinsichtlich der Vollständigkeit zu prüfen, umfasst die Recheneinrichtung ein Computerprogramm PR', welches ausgebildet ist, die Aufnahmen mittels der trainierten Objekterkennungs-Funktion F1 zu analysieren. Ergebnis einer solchen Analyse kann sein, dass es elektronische Bauteile auf einer Flachbaugruppe FB fehlen, sodass eine entsprechende Meldung an den Benutzer ausgegeben wird.

Die Recheneinrichtungen R, R' und R" können in etwa den gleichen Aufbau aufweisen. Beide können beispielsweise einen Prozessor und einen flüchtigen oder nicht-flüchtigen Speicher aufweisen, wobei der Prozessor operativ mit dem Speicher gekoppelt ist. Der Prozessor ist vorgesehen, um entsprechende in Form eines Codes auf dem Speicher vorliegende Befehle abzuarbeiten, um z.B. Trainings-Bilddaten TBD zu erzeugen, die (untrainierte oder vortrainierte) Objekterkennungs-Funktion F0 zu trainieren oder die trainierte Objekterkennungs-Funktion F1 auszuführen.

Die Aufgabe dieser Beschreibung besteht lediglich darin, veranschaulichende Beispiele bereitzustellen und weitere Vorteile und Besonderheiten dieser Erfindung anzugeben, und somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und *vica versa.*

Darüber hinaus kann der Gegenstand dieser Offenbarung auf verschiedenen Gebieten außer der Bestückungskontrolle der Flachbaugruppen zum Einsatz kommen. So können Trainings-Bilddaten wie oben beschrieben zum Trainieren von Objekterkennungs-Funktionen für Systeme erzeugt werden, die beispielsweise im Bereich des autonomen Fahrens eingesetzt werden. Dabei geht man von einem annotierten Bild aus, auf dem eine Landschaft mit einer Fahrbahn und einem oder mehreren in der Landschaft angeordneten Objekten zu sehen ist. Den Objekten sind Labels zugeordnet. Mit diesem annotierten Bild als Ausgangspunkt kann das oben beschriebene Verfahren durchgeführt werden, um entsprechende Trainings-Bilddaten zu erzeugen. Anschließend kann mit diesen Trainings-Bilddaten eine Objekterkennungs-Funktion für das autonome Fahren trainiert werden.

In den Ausführungsbeispielen und Figuren können gleiche oder gleich wirkende Elemente jeweils mit den gleichen Bezugszeichen versehen sein. Die Bezugszeichen, insbesondere in den Ansprüchen, sind lediglich zur Vereinfachung der Findung der mit den Bezugszeichen versehenen Elemente vorgesehen und haben keine einschränkende Wirkung auf den unter den Schutz gestellten Gegenstand inne.

## Patentansprüche

1. Computerimplementiertes Verfahren zum Bereitstellen von Trainings-Bilddaten (TBD) zum Trainieren einer Funktion, insbesondere einer Objekterkennungs-Funktion (F0), wobei das Verfahren folgende Schritte umfasst:
S1 Bereitstellen zumindest eines annotierten Bildes (AB), wobei das annotierte Bild (AB) zumindest ein Objekt (O1, O2, O31,O32, O41, O42, O43, O5) mit einer dem zumindest einem Objekt zugeordneten Annotation (L1, L2) aufweist, wobei die Annotation einen Bildbereich beschreibt, in dem das zumindest eine Objekt (O1,O2, O31,O32, O41, O42, O43, O5) enthalten ist,
S2 Auswählen eines Objektes (O1,O2, O31,O32, O41, O42, O43, O5) in dem annotierten Bild (AB),
S3 Entfernen des durch die Annotation (L1, L2) beschriebenen Bildbereichs, um das ausgewählte Objekt (O1,O2, O31, O32, O41, O42, O43, O5) samt der dem ausgewählten Objekt (O1,O2, O31,O32, O41, O42, O43, O5) zugeordneten Annotation (L1, L2) aus dem annotierten Bild (AB) zu entfernen und dadurch ein modifiziertes annotiertes Bild (MAB) zu erzeugen,
S4 Bereitstellen der das modifizierte annotierte Bild (MAB) enthaltenden Trainings-Bilddaten (TBD).

2. Verfahren nach Anspruch 1, wobei das annotierte Bild (AB) einen Hintergrund (H) aufweist.

3. Verfahren nach Anspruch 2, wobei der Hintergrund (H) ein digitales Abbild einer Leiterplatte aufweist.

4. Verfahren nach einem der Ansprüche 1 bis 3, wobei das annotierte Bild eine Vielzahl von Objekten (O1,O2, O31, O32, O41, O42, O43, O5) umfasst.

5. Verfahren nach einem der Ansprüche 1 bis 4, wobei die das zumindest eine Objekt (O1, O2, O31,O32, O41, O42, O43, O5) als ein digitales Abbild eines elektronischen Bauelements zum Bestücken einer Leiterplatte ausgebildet ist.

6. Verfahren nach einem der Ansprüche 1 bis 5, wobei, um mehrere unterschiedliche modifizierte annotierte Bilder zu erzeugen, die Schritte S2 und S3 so lange wiederholt werden, bis das modifizierte annotierte Bild (MAB) keine Objekte (O1, O2, O31,O32, O41, O42, O43, O5) mehr aufweist, wobei die unterschiedlichen modifizierten annotierten Bilder den Trainings-Bilddaten (TBD) hinzugefügt werden.

7. Verfahren nach einem der Ansprüche 1 bis 6, wobei das annotierte Bild (AB) und das modifizierte annotierte Bild (MAB) weiterverarbeitet werden, um weitere annotierte Bilder zu erzeugen, wobei die weiteren annotierten Bilder den Trainings-Bilddaten (TBD) hinzugefügt werden.

8. Verfahren nach einem der Ansprüche 1 bis 7, wobei das Entfernen des durch die Annotation beschriebenen Bildbereichs ein Überschreiben des Bildbereichs umfasst.

9. Verfahren nach einem der Ansprüche 1 bis 8, wobei zum Überschreiben eine, vorzugsweise genau eine Farbe, ein Zufallsmuster oder ein Bereich eines anderen Bildes, beispielsweise eines Hintergrundbildes (HB) verwendet wird.

10. Verfahren nach einem der Ansprüche 1 bis 9, wobei der Bereich des anderen Bildes dem Bildbereich korrespondiert, insbesondere die gleiche Größe und/oder die Position hat.

11. Verfahren nach einem der Ansprüche 1 bis 10, wobei die Annotation (L1, L2) Informationen über Größe und Position des zumindest einen Objektes in dem annotierten Bild (AB) und/oder über alle dem Objekt zugehörigen Pixel in dem annotierten Bild (AB) enthält.

12. System zum Erzeugen und Bereitstellen von Trainings-Bilddaten (TBD) zum Trainieren einer Funktion, insbesondere einer Objekterkennungs-Funktion (FO), wobei das System (1) eine erste Schnittstelle (S1), eine zweite Schnittstelle (S2) und eine Recheneinrichtung (R) umfasst, wobei
- die erste Schnittstelle (S1) dazu konfiguriert ist, zumindest ein annotiertes Bild (AB) zu empfangen, wobei das annotierte Bild (AB) zumindest ein Objekt (O1, O2, O31, O32, O41, O42, O43, O5) mit einer dem zumindest einem Objekt zugeordneten Annotation (L1, L2) aufweist, wobei die Annotation (L1, L2) einen Bildbereich definiert, in dem das zumindest eine Objekt (O1, O2, O31, O32, O41, O42, O43, O5) enthalten ist,
- die Recheneinrichtung (R) dazu konfiguriert ist, ein Objekt (O1, O2, O31, O32, O41, O42, O43, O5) in dem annotierten Bild (AB) auszuwählen, und den durch die Annotation (L1, L2) beschriebenen Bildbereich zu entfernen, um das ausgewählte Objekt (O1,O2, O31, O32, O41, O42, O43, O5) samt der dem ausgewählten Objekt zugeordneten Annotation (L1, L2) aus dem annotierten Bild (AB) zu entfernen und dadurch ein modifiziertes annotiertes Bild (MAB) zu erzeugen,
- die zweite Schnittstelle (S2) dazu konfiguriert ist, die das modifizierte annotierte Bild (MAB) enthaltenden Trainings-Bilddaten (TBD) bereitzustellen.

13. Computerprogrammprodukt, umfassend Befehle, die bei der Ausführung des Computerprogramms (PR) durch einen Computer diesen veranlassen, ein Verfahren nach einem der Ansprüche 1 bis 11 auszuführen.

14. Verwendung der nach einem Verfahren nach einem der Ansprüche 1 bis 11 bereitgestellten Trainings-Bilddaten (TBD) zum Trainieren einer Funktion (F0, F1).

15. Verwendung einer nach Anspruch 14 trainierten Funktion (F1) zur Kontrolle der Richtigkeit der Bestückung von Flachbaugruppen (FB) bei Flachbaugruppenproduktion.
